# EUROPEAN PATENT APPLICATION

(11) **EP 4 332 993 A1**
(43) Date of publication of application: **06.03.2024**
(21) Application number: 22796028.3
(22) Date of filing: 19.04.2022
(51) Int. Cl.: G21F 5/008, G21F 5/10, G21F 1/08, G21F 5/12, C22C 9/04, C22C 1/00, C22C 45/02

(54) **SPENT NUCLEAR FUEL CANISTER WITH IMPROVED CORROSION RESISTANCE AND MECHANICAL PROPERTIES**

(30) Priority: 30.04.2021 KR 20210056352
(71) Applicant: Korea Radioactive Waste Agency, Gyeongju-si, Gyeongsangbuk-do 38062 (KR)
(72) Inventor: KIM, Seung Hyun, Sejong 30130 (KR); KIM, Min Seok, Daejeon 35245 (KR); LEE, Sang Hwan, Daejeon 34018 (KR); SHIN, Chang Min, Daejeon 34075 (KR); YUN, Hyung Ju, Daejeon 34070 (KR); HAN, Man Ho, Daejeon 35356 (KR); LEE, Jeong Hwan, Daejeon 34022 (KR); JEONG, Mi Seon, Sejong 30098 (KR); CHO, Seo Yeon, Daejeon 34125 (KR); SEO, Ji Hye, Daejeon 34121 (KR); JUNG, Hae Ryong, Daejeon 34049 (KR)
(74) Representative: Kraus & Lederer PartGmbB
(86) International application number: PCT/KR2022/005596
(87) International publication number: WO 2022/231195

(57) **Abstract**

According to a spent nuclear fuel canister of the present invention, as a mixed filler having different compositions, shapes, and the like of a filler filled inside the canister is applied in a multi-layer structure, the spent nuclear fuel canister has excellent chemical resistance and corrosion resistance that can maintain high durability even in an environment prone to corrosion where decay heat of the spent nuclear fuel may be generated and in an environment where external impact may be applied. In addition, the spent nuclear fuel canister can facilitate heat emission of the decay heat generated from the spent nuclear fuel located inside the canister, and has a self-sealing function to prevent radiation emitted from the spent nuclear fuel located inside from being exposed to the outside when the canister is damaged due to the external impact, corrosion, etc.

## Description

### [Technical Field]

The present invention relates to a spent nuclear fuel canister with excellent corrosion resistance and mechanical property, and more particularly, to a spent nuclear fuel canister capable of semi-permanently and fundamentally blocking spent nuclear fuel from the surrounding environment and having excellent durability and weather resistance even when subjected to strong external impact or even in a corrosive environment.

### [Background Art]

Nuclear waste, such as high-level waste and spent nuclear fuel, which are inevitably generated from nuclear industry, should be safely isolated from an ecosystem for a long period of time. A canister, which is one of the engineered barriers for this purpose, may usually be made of a single or alloy material. France, the UK, Japan, etc., are considering a method of making high-level waste into solidified glass, putting the made glass solidified material in a container again, and then packaging the container in another container. Canada, Germany, Finland, Sweden, etc., are considering a method of directly putting spent nuclear fuel in a container and packaging the container. In the United States, a separate canister is being designed for two types of solidified glass and spent nuclear fuel. In the case of Korea, a concept of disposing spent nuclear fuel in deep geology is being pursued. For example, a canister is disposed vertically in deep crystalline bedrock at a depth of 500 m, and an area around the canister is filled with compressed bentonite.

However, as described above, water pressure of 50 atm or more due to groundwater and swelling pressure of 100 atm or more due to a cushioning material filled to protect the canister may exist in a disposal cave built in bedrock more than 500 m underground where a canister containing spent nuclear fuel will be disposed. Therefore, the canister should have structural stability to withstand such pressure. In addition, it should be possible to semi-permanently prevent radionuclides present in spent nuclear fuel from leaking into the surrounding environment.

The canister, which is the container capable of storing the spent nuclear fuel, is formed of a metal canister in a form of a barrel, and a basket is provided inside the metal canister to store the spent nuclear fuel. A basket inside the metal canister is fixed through a support member, a housing member, or the like, and a neutron shielding body is provided outside the canister to store the spent nuclear fuel.

Generally, the canister material is mainly stainless steel, and the canister includes a canister shell enclosing a side surface of the basket, a canister lid plate enclosing an upper end of the basket, and a canister bottom plate enclosing a lower end of the basket. After the spent nuclear fuel is loaded into the basket, the canister lid plate is fixed to the canister shell by a bolt-nut connection and sealed by welding.

However, these welded areas (welded areas and heat-affected areas) and bolt-nut connection areas are vulnerable to corrosion cracks and are factors that impair the integrity of a spent nuclear fuel dry storage system, and the welding process involving heat is a process with a very high risk factor in a dry storage process of spent nuclear fuel where the temperature should be strictly controlled.

In addition, the commonly used canister made of materials such as stainless steel should have a fairly thick thickness to prevent radionuclides from leaking into the surrounding environment, and should be able to semi-permanently and completely block the radionuclides from leaking into the surrounding environment. In particular, chemically corroded canisters may be easily damaged, such as cracks and holes being formed even in weak external impact. Damage to the canister causes radionuclides to leak into the surrounding environment, thereby causing a fatal problem in which organisms cannot survive. Therefore, the canister should not only have high structural stability, but also have strong weather resistance against chemical corrosion so that the initial high structural stability may be maintained semi-permanently.

Korean Patent Publication No. 10-2018255 discloses a method and system for corrosion prevention of spent nuclear fuel canister using impressed current method, and Korean Patent Publication No. 10-2014967 discloses a corrosion prevention method of spent nuclear fuel canister using sacrificial anode method and its application. However, the means for preventing corrosion of a spent nuclear fuel canister should be applied with electrical energy at all times during the semi-permanent storage of nuclear fuel, so energy efficiency is significantly low, and has the limitations that the corrosion prevention effect may not be implemented in an environment where electric energy may not be supplied or when the supply of electric energy is interrupted. Therefore, a spent nuclear fuel canister with semi-permanent and excellent corrosion resistance and mechanical strength is required without additional energy supply during the storage process of the spent nuclear fuel.

Meanwhile, even when a nuclear reactor shuts down, it continues to emit heat because radioactive materials generated before the shut down are decayed until converted into stable elements. Since a high temperature environment easily causes the durability of the canister to deteriorate due to corrosion, the decay heat naturally generated from spent nuclear fuel should be easily emitted to the outside of the canister.

Therefore, there is a need for a spent nuclear fuel canister with excellent corrosion resistance capable of semi-permanently maintaining high structural stability even in an environment where the decay heat of the spent nuclear fuel is generated and corrosion is easy and in an environment where external impact may be applied for a long period of time.

### [Related Art Document]

### [Patent Document]

(Patent Document 1) Korean Patent Publication No. 10-2018255
(Patent Document 2) Korean Patent Publication No. 10-2014967

### [Disclosure]

### [Technical Problem]

An object of the present invention provides spent nuclear fuel with excellent chemical resistance and corrosion resistance capable of maintaining high durability even in an environment where corrosion is easy to generate decay heat of spent nuclear fuel and in an environment where external impact may be applied.

Another object of the present invention provides a spent nuclear fuel canister capable of facilitating heat emission of decay heat generated from spent nuclear fuel located inside the canister.

Still another object of the present invention provides a spent nuclear fuel canister having a self-sealing function capable of preventing radiation emitted from the spent nuclear fuel located inside from being exposed to the outside when the canister is damaged due to external impact, corrosion, etc.

### [Technical Solution]

In one general aspect, a spent nuclear fuel canister includes: an outer canister (100) made of a copper alloy containing dissimilar metals; and an inner canister (200) disposed in an inner space of the outer canister (100), in which the inner canister (200) has a spent nuclear fuel storage space (210) therein, and the dissimilar metals include at least one selected from zirconium and beryllium.

The copper alloy may contain 0.1 to 20 atomic% of dissimilar metals.

The copper alloy may be a Cu-Zr binary alloy having a three-dimensional network structure with a blocky eutectic structure in which a Cu₅Zr superlattice phase and a Cu crystal phase repeatedly appear.

The inner canister (200) may be made of a metal or alloy containing at least one selected from iron and tin.

The spent nuclear fuel canister may further include a filler layer (300) formed between an inner surface of the outer canister (100) and an outer surface of the inner canister (200) and filled with a first granular filler, in which the spent nuclear fuel storage space (210) may be filled with a second granular filler, when the spent nuclear fuel is accommodated in the spent nuclear fuel storage space (210), the second granular filler may be filled in a gap between the inner surface of the inner canister (200) and the outer surface of the spent nuclear fuel to conduct decay heat generated from the spent nuclear fuel to the inner canister (200), the first granular filler filled in the gap between the inner surface of the outer canister (100) and the outer surface of the inner canister (200) may conduct the decay heat of the spent nuclear fuel conducted from the inner canister (200) to the outer canister (100), and the first granular filler and the second granular filler may include: a crystalline metal filler including a dispersed phase of a crystalline metal matrix and a neutron shielding material; and an amorphous metal filler including a dispersed phase of an amorphous metal matrix and the neutron shielding material.

A mixed weight ratio of the crystalline metal filler and the amorphous metal filler may be 1:0.1 to 1.

The crystalline metal filler may be spherical, and the amorphous metal filler may include a spherical first amorphous metal filler and a fibrous second amorphous metal filler.

A mixed weight ratio of the first amorphous metal filler and the second amorphous metal filler may be 1:0.2 to 1.

An average length and an average diameter of the second amorphous metal filler may be 3 to 50 mm and 0.01 to 1,000 µm, respectively.

The first granular filler and the second granular filler may further include a neutron shielding filler made of a neutron shielding material.

A mixed weight ratio of the crystalline metal filler, the amorphous metal filler, and the neutron shielding filler may be 1:0.1 to 1:0.02 to 0.1.

An average particle size of the crystalline metal filler and the amorphous metal filler may be 0.1 to 10 mm.

An average particle size ratio of the crystalline metal filler and the amorphous metal filler may be 1:0.1 to 0.8.

The neutron shielding material may include any one or two or more selected from the group consisting of boron carbide, boron nitride, boron oxide, zinc borate, aluminum hydroxide, hafnium, hafnium diboride, titanium diboride, ferroboron, and uranium dioxide. The first granular filler and the second granular filler may include 0.01 to 10 parts by weight of the neutron shielding material based on 100 parts by weight of the crystalline metal matrix or the amorphous metal matrix.

The neutron shielding material may be a particle having an average particle size of 500 nm to 300 µm and may be dispersed on the crystalline metal matrix or the amorphous metal matrix.

The crystalline metal matrix or the amorphous metal matrix may include any one or two or more selected from the group consisting of Fe-based, Cu-based, Al-based, Mg-based, Zr-based, Ca-based, Ti-based, Ni-based, Co-based, and Hf-based metals.

An average thickness of the outer canister (100) may be 5 to 50 mm, and a minimum distance between the outer and inner surfaces of the inner canister (200) may be 5 mm or more.

The spent nuclear fuel canister may further include:
a cover (400) coupled to the outer canister (100) and
sealing the spent nuclear fuel so that the spent nuclear fuel is not exposed to the outside of the spent nuclear fuel canister.

### [Advantageous Effects]

According to a spent nuclear fuel canister of the present invention, it is possible to provide spent nuclear fuel with excellent chemical resistance and corrosion resistance capable of maintaining high durability even in an environment where corrosion is easy to generate decay heat of spent nuclear fuel and in an environment where external impact may be applied.

In addition, according to a spent nuclear fuel canister of the present invention, it is possible to facilitate heat emission of decay heat generated from the spent nuclear fuel located inside the canister.

In addition, according to a spent nuclear fuel canister of the present invention, it is possible to implement a self-sealing function to prevent radiation emitted from the spent nuclear fuel located inside from being exposed to the outside when the canister is damaged due to external impact, corrosion, etc.

### [BRIEF DESCRIPTION OF THE DRAWINGS]

FIG. 1 is a cross-sectional view of a spent nuclear fuel canister according to the present invention, and is a cross-sectional view taken along line A-A' of FIG. 2.
FIG. 2 is a plan view of the spent nuclear fuel canister according to the present invention.
FIG. 3 is an enlarged cross-section of an inner canister of the spent nuclear fuel canister illustrated in FIG. 1.

### [Best Mode]

Hereinafter, a spent nuclear fuel canister with improved corrosion resistance and mechanical properties according to the present invention will be described in detail with reference to the attached drawings.

The drawings provided herein are provided by way of example so that the spirit of the present invention may be sufficiently transferred to those skilled in the art. Therefore, the present invention is not limited to the accompanying drawings provided below, but may be modified in many different forms. In addition, the accompanying drawings suggested below will be exaggerated in order to clear the spirit and scope of the present invention.

Technical terms and scientific terms used herein have the general meaning understood by those skilled in the art to which the present invention pertains unless otherwise defined, and a description for the known function and configuration unnecessarily obscuring the gist of the present invention will be omitted in the following description and the accompanying drawings.

A singular form of a term used herein may be construed to include a plural form as well unless otherwise indicated.

Numerical ranges as used herein include all possible combinations of lower and upper limits and all values within that range, increments logically derived from the form and width of the defined ranges, all values defined herein, and upper and lower limits of numerical ranges defined in different forms. Unless otherwise defined in the specification of the present invention, values out of a numerical range that may occur due to experimental errors or rounding of values are also included in the defined numerical range.

"Including" mentioned herein is an open-ended description having an equivalent meaning to expressions such as "comprising," "containing," "having," "characterizing," and elements, materials, or processes not listed additionally are not excluded.

Unless specifically stated herein, the unit of % used means % by weight unless otherwise specified.

The term "layer" as used herein means that each material forms a continuum and has a relatively small dimension in a thickness compared to a width and a length. Accordingly, the term "layer" or "film" as used herein should not be interpreted as a two-dimensional flat plane.

As used herein, the term "spent nuclear fuel" may refer to nuclear fuel materials used as fuel in a commercial or research nuclear reactor or nuclear fuel materials subjected to nuclear fission by other methods.

The spent nuclear fuel canister should have long-term storage stability that may semi-permanently block spent nuclear fuel from an external environment for more than 10,000 years. However, even if the canister has high initial mechanical properties and structural stability, problems such as a decrease in mechanical strength due to chemical corrosion occur as the canister is exposed to a high temperature and corrosive environment for a long period of time due to decay heat naturally occurring in spent nuclear fuel. Therefore, in the process of corrosion over a long period of time, structural stability may decrease and damage such as cracks or holes may occur in the canister. Due to this damage to the canister, the canister may not perform its main role of blocking spent nuclear fuel 10 from the outside.

Accordingly, the present invention provides the spent nuclear fuel canister that is effective in emitting the decay heat generated from the spent nuclear fuel 10 located inside the canister through the means described below, and in particular, may minimize the damage to the canister due to external impact, corrosion, etc. In addition, the spent nuclear fuel canister having a self-sealing function is provided to prevent radiation emitted from spent nuclear fuel 10 from being exposed to the outside even if the canister is damaged.

The spent nuclear fuel canister according to the present invention includes: an outer canister (100) made of a copper alloy containing dissimilar metals; and an inner canister (200) disposed in an inner space of the outer canister (100), in which the inner canister (200) has a spent nuclear fuel storage space (210) therein, and the dissimilar metals include at least one selected from zirconium (Zr) and beryllium (Be). That is, in the present invention, the outer canister 100 is made of materials of a binary alloy of copper and zirconium, a binary alloy of copper and beryllium, a ternary alloy of copper, zirconium and beryllium, or a ternary or more alloy containing other elements, thereby providing the spent nuclear fuel canister with excellent corrosion resistance capable of maintaining high mechanical properties for a long period of time of more than 10,000 years.

A composition ratio of the copper alloy is not greatly limited as long as it may achieve high corrosion resistance and mechanical properties, but preferably contains 0.1 to 20 atomic%, specifically 0.5 to 15 atomic%, and more specifically 1 to 10 atomic% of dissimilar metals. As an example of an alloy of copper and zirconium, a binary alloy of Cu_{91.5}Zr_{8.5} (atomic %) may be given as an example. When this is satisfied, it is possible to minimize costs, provide a spent nuclear fuel canister with particularly excellent mechanical properties and corrosion resistance, and implement further improved self-sealing characteristics through a combination of filler compositions described later.

When the copper alloy is an alloy of copper and zirconium, the alloy may be a Cu-Zr binary alloy having a three-dimensional network structure of a blocky eutectic structure in which a Cu₅Zr superlattice phase and a Cu crystal phase repeatedly appear. The three-dimensional network structure may be formed by a hot working process such as hot rolling, and a three-dimensional network structure having a blocky structure in which the Cu₅Zr superlattice phase and Cu crystal phase repeatedly appear may be formed by the hot working process. Specifically, the blocky eutectic structure may have a structure in which the Cu₅Zr superlattice phase forms a three-dimensional network structure with a thickness of 0.5 to 1.5 µm, and a Cu crystal phase having a diameter of 1.0 to 1.5 µm is distributed therebetween. The alloy of copper and zirconium may be produced by a method that satisfies the above-described structure, and may be produced, for example, by arc melting a mixture containing copper and zirconium measured to have the composition ratio to produce an ingot, sucking and casting the ingot into a mold, and hot working the cast alloy. In this case, the hot working may be performed at a temperature of 600 to 700°C, and may be performed at a reduction rate of 10 to 20% each time until the final thickness reduction rate is 70 to 80%. In this way, a process phase constituting the alloy of copper and zirconium according to an example of the present invention may change to a three-dimensional interconnected network structure by hot-working a cast copper-zirconium alloy composed of a very fine layered structure.

When the copper alloy is an alloy of copper and beryllium, the copper alloy may be produced in various ways, and may be produced, for example, by melting a mixture containing copper and beryllium measured to have a specific composition ratio to produce an ingot, sucking and casting the ingot into a mold, and processing the cast alloy by heat treatment. In this case, the working may be performed in a temperature range of 300 to 800°C.

The inner canister 200 may be made of a metal or alloy containing any one or two or more selected from copper, iron, tin, and the like. When the inner canister 200 is made of an iron material, as in the present invention, as the outer canister 100 is formed of the above-described copper alloy, the spent nuclear fuel canister according to the present invention may minimize the disadvantages of iron materials which are relatively more vulnerable to corrosion problems due to oxidation compared to copper materials, and may have excellent structural stability due to high mechanical properties and high impact resistance.

The spent nuclear fuel canister according to a preferred example of the present invention may further include a filler layer 300 formed between an inner surface of the outer canister 100 and an outer surface of the inner canister 200 and filled with a first granular filler, in which the spent nuclear fuel storage space 210 may be filled with a second granular filler, when the spent nuclear fuel is accommodated in the spent nuclear fuel storage space 210, the second granular filler may be filled in a gap between the inner surface of the inner canister 200 and the outer surface of the spent nuclear fuel to conduct decay heat generated from the spent nuclear fuel to the inner canister 200, the first granular filler filled in the gap between the inner surface of the outer canister 100 and the outer surface of the inner canister 200 may conduct the decay heat of the spent nuclear fuel conducted from the inner canister 200 to the outer canister 100, and the first granular filler and the second granular filler may include: a crystalline metal filler including a dispersed phase of a crystalline metal matrix and a neutron shielding material; and an amorphous metal filler including a dispersed phase of an amorphous metal matrix and the neutron shielding material. That is, the spent nuclear fuel canister according to a preferred example of the present invention may include: an outer canister 100; an inner canister 200 disposed in an inner space of the outer canister 100; and a filler layer 300 formed between an inner surface of the outer canister 100 and an outer surface of the inner canister 200 and filled with a first granular filler, in which the inner canister 200 has a spent nuclear fuel storage space 210 therein, and the spent nuclear fuel storage space 210 is filled with a second granular filler, when the spent nuclear fuel is accommodated in the spent nuclear fuel storage space 210, the second granular filler is filled in a gap between the inner surface of the inner canister 200 and the outer surface of the spent nuclear fuel to conduct decay heat generated from the spent nuclear fuel to the inner canister 200, the first granular filler filled in the gap between the inner surface of the outer canister 100 and the outer surface of the inner canister 200 conducts the decay heat of the spent nuclear fuel conducted from the inner canister 200 to the outer canister 100, and the first granular filler and the second granular filler include: a crystalline metal filler including a dispersed phase of a crystalline metal matrix and a neutron shielding material; and an amorphous metal filler including a dispersed phase of an amorphous metal matrix and the neutron shielding material.

The fillers used in the present invention, that is, the first granular filler and the second granular filler, are mixed fillers composed of the crystalline metal filler and the amorphous metal filler, and are fillers in which the crystalline metal filler and the amorphous metal filler are mixed. Specifically, by applying a mixture of an amorphous metal filler with high elasticity and rigidity and a crystalline metal filler with high thermal conductivity as the filler, the decay heat generated from the spent nuclear fuel 10 may be effectively emitted to the outside of the canister.

In particular, by using the mixed filler, it is possible to prevent radiation leakage of the spent nuclear fuel 10 through the self-sealing properties when the canister is damaged along with high heat conduction properties. Specifically, when the canister is damaged for various reasons and thus cracks or holes are formed in the canister, a portion of the filler charged inside the canister is discharged. In this case, a portion of the amorphous metal filler, which has a lower melting point and higher elasticity and rigidity than the crystalline metal filler, is discharged to the outside through the cracks or holes formed in the canister along with a portion of the crystalline metal filler. In addition, high heat due to the decay heat generated from the spent nuclear fuel 10 is conducted to the amorphous metal filler through the highly thermally conductive crystalline metal filler. In this way, when heat is applied due to the decay heat generated from the spent nuclear fuel 10, fillers with different physical properties such as rigidity, elasticity, strength, or shape are discharged to the outside through the cracks or holes. In this process, the self-sealing through discharge-bottleneck-delay-blockage is implemented. In addition, as will be explained below, when a fibrous filler is more used along with a spherical filler, the bottleneck-delay-blockage may be effectively formed and the high self-sealing may be achieved. In this way, by using two or more types of fillers with various physical properties, self-sealing characteristics are realized when the canister is damaged and the cracks or holes occur, thereby preventing the radiation emitted from the spent nuclear fuel 10 located inside the canister from leaking into the outside of the canister. On the other hand, when the physical properties are the same, i.e., a single type of filler is discharged, the self-sealing may not be practically implemented due to the difficulty in the occurrence of bottleneck-delay-blockage, so the mixed filler composed of the crystalline metal filler and the amorphous metal filler with different physical properties such as elasticity and strength should be used.

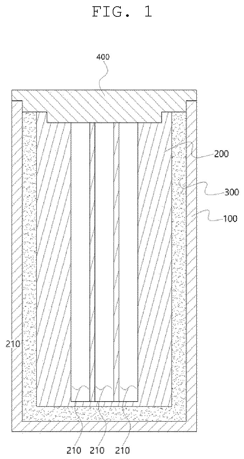

In addition, as the above-described mixed filler is present in the storage space 210 of the spent nuclear fuel 10 and the filler layer 300, respectively, as illustrated in FIG. 1, when the cracks or holes are formed in the canister, the number of bent discharge paths increases while a portion of the filler is discharged to the outside, thereby causing clogging more effectively and significantly improving the self-sealing effect.

A mixed weight ratio of the crystalline metal filler and the amorphous metal filler may be sufficient to achieve the self-sealing characteristics with the high heat conduction properties. However, for example, it is preferable that the weight of the crystalline metal filler is greater than the weight of the amorphous metal filler. The weight of the crystalline metal filler may be specifically 1:0.1 to 1 and more specifically 1:0.2 to 0.8, and in one embodiment, more preferably 1:0.5. If this is satisfied, when the relatively high heat conduction properties are satisfied and the cracks or holes are formed in the canister, the self-sealing characteristics may be better due to the discharge-bottleneck-delay-blockage during the discharge of a portion of the filler.

The shape of the crystalline metal filler is not greatly limited and, for example, may have a spherical shape. When the crystalline metal filler has a spherical shape, its circularity may be, for example, 0.7 to 1, and in one embodiment, 0.99.

The shape of the amorphous metal filler may have various shapes such as a spherical shape, a flake shape, and a fibrous shape, but preferably, a filler having a spherical shape and a filler having a fibrous shape are used together. That is, the amorphous metal filler may include a spherical first amorphous metal filler and a fibrous second amorphous metal filler. In the case where the amorphous metal filler includes the spherical first amorphous metal filler and the fibrous second amorphous metal filler, when the cracks or holes are formed in the canister, the bottleneck phenomenon-delay-blockage effectively occurs during the discharge of a portion of the filler, so the self-sealing may be implemented quickly. As a preferred example, the crystalline metal filler may have a spherical shape, and the amorphous metal filler may include the spherical first amorphous metal filler and the fibrous second amorphous metal filler.

An average particle size of the crystalline metal filler and the amorphous metal filler may be 0.1 to 10 mm, and the average particle size ratio of the crystalline metal filler and the amorphous metal filler may be 1:0.1 to 0.8. In an embodiment, the average particle diameter of the amorphous metal filler may be 1.5 mm, and the average particle size ratio of the crystalline metal filler and the amorphous metal filler may be 1:0.5. When this is satisfied, as the heat conduction effect of the decay heat emitted from the spent nuclear fuel 10 is further improved, the self-sealing effect due to damage to the canister may also be improved.

The first amorphous metal filler has a spherical shape, and its circularity may be, for example, 0.7 to 1, and its average particle size may be 0.1 to 10 mm. In an embodiment, the circularity may be 0.99 and the average particle diameter may be 1.5 mm. The second amorphous metal filler has a fibrous shape, and may be a fibrous shape with, for example, an average length and average diameter of 3 to 50 mm and 0.01 to 1,000 µm, respectively, and specifically 0.1 to 500 µm. In an embodiment, the second amorphous metal filler may have a fibrous shape with an average length and average diameter of 10 mm and 100 µm, respectively. However, this is only described as a preferred example, and the present invention is not construed as being limited to the above numerical values.

When the amorphous metal filler includes the spherical first amorphous metal filler and the fibrous second amorphous metal filler, the mixed weight ratio of the first amorphous metal filler and the second amorphous metal filler is not greatly limited, but, for example, it may be preferable that the weight of the first amorphous metal filler is greater than the weight of the second amorphous metal filler, and it may be more preferable that the weight of the first amorphous metal filler is specifically 1:0.2 to 1 and more specifically 1:0.2 to 0.8. In an embodiment, the weight of the first amorphous metal filler may be 1:0.5. If this is satisfied, the cracks or holes are formed in the canister, the self-sealing characteristics may be better due to the discharge-bottleneck-delay-blockage during the discharge of a portion of the filler.

In an example of the present invention, the first granular filler and the second granular filler may further include a neutron shielding filler made of a neutron shielding material. As described above, the crystalline metal filler and the amorphous metal filler used as the first granular filler and the second granular filler include a metal matrix and a neutron shielding material dispersed on the metal matrix. In addition, when the neutron shielding filler made of the neutron shielding material is further used, that is, when the first granular filler and the second granular filler include the neutron shielding filler made of the crystalline metal filler, the amorphous metal filler, and the neutron shielding material, the shielding effect of the radiation emitted from the spent nuclear fuel 10 may be further improved.

When the first granular filler and the second granular filler further include the neutron shielding filler, the content of first granular filler and second granular filler used is not greatly limited, but for example, may be preferable to be less than the weight of the crystalline metal filler, and specifically, may be used in an amount of 0.02 to 0.1 parts by weight based on 1 part by weight of the crystalline metal filler. In an embodiment, the mixed weight ratio of the crystalline metal filler, the amorphous metal filler, and the neutron shielding filler may be 1:0.1 to 1:0.02 to 0.1 or 1:0.2 to 0.8:0.02 to 0.1. When this is satisfied, the self-sealing effect due to damage to the canister is excellent and at the same time, the shielding effect of the radiation emitted from the spent nuclear fuel 10 may be further improved.

The average size of the neutron shielding material may be sufficient to provide the required neutron shielding performance while being easily dispersed on the metal matrix. As a preferred example, for the average particle size of the neutron shielding material, D50, which is a particle size corresponding to 50% of the total volume when a volume is accumulated from small particles, may be 500 nm to 300 µm, preferably 500 nm to 100 µm, and more preferably, 500 nm to 50 µm. When the neutron shielding material has this average particle size, the self-sealing effect according to required mechanical properties such as elasticity and rigidity may be further improved. In addition, the neutron shielding material may be more evenly distributed on the metal matrix, the mixed property into the metal matrix may be further improved, and the higher neutron shielding effect may be implemented.

In one example of the present invention, the neutron shielding material is a particle having an average particle size of 500 nm to 300 µm and may be a material dispersed on the crystalline metal matrix or the amorphous metal matrix.

The neutron shielding material may be any component that may shield the radiation emitted from the spent nuclear fuel 10, and may include any one or two or more selected the group consisting of boron carbide, boron nitride, boron oxide, zinc borate, aluminum hydroxide, hafnium, hafnium diboride, titanium diboride, ferroborone, and uranium dioxide. In an example of the present invention, the neutron shielding material may be a boron-based shielding material, such as boron carbide. In particular, when the metal matrix contains a Fe-based metal and boron carbide is used as the neutron shielding material, it is possible to implement high mechanical properties while having sufficient neutron shielding performance. In addition, the shape of the neutron shielding material is not greatly limited, and may have various shapes, such as a spherical shape, a fibrous shape, or a flake shape.

The amorphous metal matrix of the amorphous metal filler is made of an amorphous solid metal that is different from a crystalline metal in which metal atoms have a periodic arrangement. The amorphous metal filler may be manufactured, for example, by a method of super-quenching a metal mixture containing a metal melted at high temperature and a neutron shielding material by flowing the metal mixture onto a high-speed rotating roll. In addition, the melting temperature of the metal of the amorphous metal matrix may be, for example, 400 to 800°C.

The amorphous metal filler includes the dispersed phase of the amorphous metal matrix and the neutron shielding material, and the content of the neutron shielding material dispersed on the amorphous metal matrix may be sufficient to provide appropriate neutron shielding performance. For example, the neutron shielding material may be used in an amount of 0.01 to 10 parts by weight, specifically 0.1 to 10 parts by weight, and more specifically 0.1 to 5 parts by weight, based on 100 parts by weight of the crystalline metal matrix or the amorphous metal matrix. However, this is only described as a specific example, and the present invention is not limited thereto.

The metal of the crystalline metal filler or the metal matrix of the amorphous metal filler may be a metal or alloy containing one or two or more selected from the group consisting of iron (Fe)-based, copper (Cu)-based, aluminum (Al)-based, magnesium (Mg)-based, zirconium (Zr)-based, calcium (Ca)-based, titanium (Ti)-based, nickel (Ni)-based, cobalt (Co)-based, and hafnium (Hf)-based metals.

As a specific example, the metal of the metal matrix of the amorphous metal filler may include any one or two or more selected from the group consisting of, for example, Fe-based amorphous alloys (e.g., Fe-Si-B-Nb-Cu alloy, Fe-Co-Cr-Mo-C-B-Y alloy, Fe-Si-B-P alloy, Fe-Y-B alloy, etc.), Ni-based amorphous alloys (e.g., Ni-Nb-Ta alloy, Ni-Nb-Ti-Hf alloy, Ni-Zr-Ti-Sn alloy, Ni-Nb-Ti-Hf alloy, etc.), Cu-based amorphous alloys (e.g., Cu-Zr alloy, Cu-Ti-Zr-Ni alloy, Cu-Hf-Al alloy, Cu-Zr-Al alloy, Cu-Zr-Al-(Y, Ag, Be) alloy etc), Al-based amorphous alloys (e.g., Al-La-Y-Ni alloy, etc.), Mg-based amorphous alloys (Mg-Ni-Nd alloy, etc.), Zr-based amorphous alloys (Zr-Al-Ni alloy, Zr-Al-Cu-Ni alloy, Zr-Be-Cu-Ni-Ti alloy, Zr-Al-Co alloy, Zr-Cu-Al-Ge-Be alloy, etc.), and the like. However, this is only explained as a specific example, and of course, amorphous metals of various compositions may be used.

As a specific example of the amorphous metal filler, an amorphous alloy ribbon of an Fe₇₃-Si₁₄-B₉-Nb₃-Cu₁ (at%) composition prepared by melt spinning and a ribbon produced after adding 1 at% of boron nitride particles (average particle size: 800 nm) to the above alloy composition are pre-heat treated at 400 to 500°C for 0.5 to 3 hours, and then ball milled to produce the spherical amorphous metal filler that is an amorphous alloy powder with an average particle size of 1.5 mm. In addition, the ribbon obtained through the heat treatment may be used to produce the fibrous amorphous metal fillers using various techniques such as melt spinning, die extrusion, and linear crystal growth. However, this is only described as a preferred example, and the present invention is not limited thereto.

The average thickness of the outer canister 100 and the inner canister 200 is not greatly limited as long as it may sufficiently shield the radiation emitted from the spent nuclear fuel 10 located inside the inner canister 200. As a specific example, the average thickness of the outer canister 100 may be 5 to 50 mm, and the minimum distance between the outer surface and the inner surface of the inner canister 200 may be 5 mm or more. However, this is only described as a specific example, and the present invention is not limited thereto.

The crystalline metal filler and the amorphous metal filler are filled in the filler layer 300, and the average thickness of the filler layer 300 is not greatly limited, but may be, for example, 0.5 to 200 mm, specifically 1 to 100 mm, and in one embodiment, 50 mm. When this is satisfied, as the heat conduction efficiency of the decay heat emitted from the spent nuclear fuel 10 may be excellent, the self-sealing effect due to the self-sealing characteristics may also be improved.

The spent nuclear fuel canister according to an embodiment of the present invention may further include a cover 400 that is coupled to the outer canister 100 and seals the spent nuclear fuel 10 from being exposed to the outside of the spent nuclear fuel canister. In this case, the coupling means of the cover 400 and the outer canister 100 may be any known fastening means. For example, various coupling means may be used, such as means by external fixing members such as bolt-nut coupling, means by welding, etc. The spent nuclear fuel may be charged into the spent nuclear fuel storage space 210, and the cover 400 is coupled to the outer canister 100 and the inner canister 200 to completely seal them. Such sealed canisters are buried underground, in a cave, or the like, to block the spent nuclear fuel from the ecosystem. In addition, the material of the cover 400 may be made of a material with high weather resistance and durability that can withstand corrosion and impact, may be made of, for example, a metal or alloy containing any one or two or more selected from copper, iron, and tin. However, this is only described as a specific example, and the present invention is not limited thereto.

The spent nuclear fuel canister according to the present invention can be stored in various places that may be isolated from the ecosystem, and may be located (buried) in places that are easily blocked from the ecosystem, such as undersea tunnels, underground, and caves. In addition, the spent nuclear fuel canister may also be stored in various places, such as on the ground.

As described above, the canister according to the present invention is a canister for storing the spent nuclear fuel 10 to semi-permanently block the spent nuclear fuel 10 from nature. The present invention also provides a method for disposing a spent nuclear fuel 10. A method of processing spent nuclear fuel 10 according to the present invention includes: a first step of preparing a spent nuclear fuel canister including: an outer canister 100, an inner canister 200 disposed in an inner space of the outer canister 100 and having a spent nuclear fuel storage space 210 formed therein, and a filler layer 300 formed between an inner surface of the outer canister 100 and an outer surface of the inner canister 200 and filled with a first granular filler; a second step of accommodating the spent nuclear fuel 10 in the nuclear fuel storage space 210; a third step of filling the nuclear fuel storage space 210 with a second granular filler, and filling a gap between an inner surface of the inner canister 200 and an outer surface of the spent nuclear fuel 10 with the second granular filler so that decay heat generated from the spent nuclear fuel 10 is conducted to the inner canister 200; and a fourth step of coupling and sealing a cover 500 to the outer canister 100 so that the spent nuclear fuel 10 is not exposed to the outside of the spent nuclear fuel canister, in which the first granular filler and the second granular filler includes: a crystalline metal filler including a dispersed phase of a crystalline metal matrix and a neutron shielding material; and an amorphous metal filler including a dispersed phase of an amorphous metal matrix and the neutron shielding material.

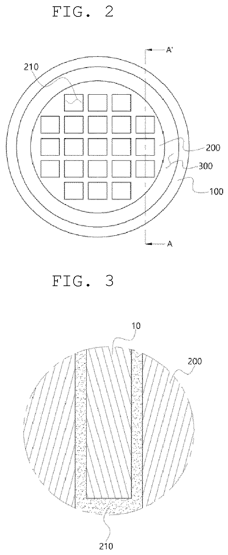

The first step is a step of preparing the spent nuclear fuel canister as illustrated in FIG. 1, and the second step is a step of accommodating the spent nuclear fuel 10 in the nuclear fuel storage space 210 of the inner canister 200. In the second step, when the spent nuclear fuel 10 is accommodated in the nuclear fuel storage space 210, a gap is formed between the inner surface of the inner canister 200 and the outer surface of the spent nuclear fuel 10, and since the spent nuclear fuel 10 is not properly fixed due to the gap, the second granular filler is charged into the gap in the third step. As illustrated in FIG. 3, after filling the second granular filler in the gap between the inner surface of the inner canister 200 and the outer surface of the spent nuclear fuel 10, in the fourth step, the cover 500 is coupled to the outer canister 100 to seal the outer canister 100 so that the spent nuclear fuel 10 is not exposed to the outside of the spent nuclear fuel canister, so it is possible to semi-permanently block the spent nuclear fuel 10 from the surrounding environment.

### [Description of Reference Signs]

- 10:: Spent nuclear fuel
- 100:: Outer canister
- 200:: Inner canister
- 210:: Spent nuclear fuel storage space
- 300:: Filler layer
- 400:: Cover

## Claims

1. A spent nuclear fuel canister, comprising:
an outer canister (100) made of a copper alloy containing dissimilar metals; and
an inner canister (200) disposed in an inner space of the outer canister (100),
wherein the inner canister (200) has a spent nuclear fuel storage space (210) therein, and
the dissimilar metals include at least one selected from zirconium and beryllium.

2. The spent nuclear fuel canister of claim 1, wherein the copper alloy contains 0.1 to 20 atomic% of dissimilar metals.

3. The spent nuclear fuel canister of claim 2, wherein the copper alloy is a Cu-Zr binary alloy having a three-dimensional network structure with a blocky eutectic structure in which a Cu₅Zr superlattice phase and a Cu crystal phase repeatedly appear.

4. The spent nuclear fuel canister of claim 1, wherein the inner canister (200) is made of a metal or alloy containing at least one selected from iron and tin.

5. The spent nuclear fuel canister further includes:
a filler layer (300) formed between an inner surface of the outer canister (100) and an outer surface of the inner canister (200) and filled with a first granular filler,
wherein the spent nuclear fuel storage space (210) is filled with a second granular filler,
when the spent nuclear fuel is accommodated in the spent nuclear fuel storage space (210),
the second granular filler is filled in a gap between the inner surface of the inner canister (200) and the outer surface of the spent nuclear fuel to conduct decay heat generated from the spent nuclear fuel to the inner canister (200), and
the first granular filler filled in the gap between the inner surface of the outer canister (100) and the outer surface of the inner canister (200) conducts the decay heat of the spent nuclear fuel conducted from the inner canister (200) to the outer canister (100), and
the first granular filler and the second granular filler include:
a crystalline metal filler including a dispersed phase of a crystalline metal matrix and a neutron shielding material; and
an amorphous metal filler including a dispersed phase of an amorphous metal matrix and the neutron shielding material.

6. The spent nuclear fuel canister of claim 5, wherein a mixed weight ratio of the crystalline metal filler and the amorphous metal filler is 1:0.1 to 1.

7. The spent nuclear fuel canister of claim 5, wherein the crystalline metal filler is spherical, and
the amorphous metal filler includes a spherical first amorphous metal filler and a fibrous second amorphous metal filler.

8. The spent nuclear fuel canister of claim 7, wherein a mixed weight ratio of the first amorphous metal filler and the second amorphous metal filler is 1:0.2 to 1.

9. The spent nuclear fuel canister of claim 7, wherein an average length and an average diameter of the second amorphous metal filler are 3 to 50 mm and 0.01 to 1,000 µm, respectively.

10. The spent nuclear fuel canister of claim 5, wherein the first granular filler and the second granular filler further include a neutron shielding filler made of a neutron shielding material.

11. The spent nuclear fuel canister of claim 10, wherein a mixed weight ratio of the crystalline metal filler, the amorphous metal filler, and the neutron shielding filler is 1:0.1 to 1:0.02 to 0.1.

12. The spent nuclear fuel canister of claim 5, wherein an average particle size of the crystalline metal filler and the amorphous metal filler is 0.1 to 10 mm.

13. The spent nuclear fuel canister of claim 12, wherein an average particle size ratio of the crystalline metal filler and the amorphous metal filler is 1:0.1 to 0.8.

14. The spent nuclear fuel canister of claim 5, wherein the neutron shielding material includes any one or two or more selected from the group consisting of boron carbide, boron nitride, boron oxide, zinc borate, aluminum hydroxide, hafnium, hafnium diboride, titanium diboride, ferroboron, and uranium dioxide.

15. The spent nuclear fuel canister of claim 5, wherein the first granular filler and the second granular filler include 0.01 to 10 parts by weight of the neutron shielding material based on 100 parts by weight of the crystalline metal matrix or the amorphous metal matrix.

16. The spent nuclear fuel canister of claim 5, wherein the neutron shielding material is a particle having an average particle size of 500 nm to 300 µm and is dispersed on the crystalline metal matrix or the amorphous metal matrix.

17. The spent nuclear fuel canister of claim 5, wherein the crystalline metal matrix or the amorphous metal matrix includes any one or two or more selected from the group consisting of Fe-based, Cu-based, Al-based, Mg-based, Zr-based, Ca-based, Ti-based, Ni-based, Co-based, and Hf-based metals.

18. The spent nuclear fuel canister of claim 1, wherein an average thickness of the outer canister (100) is 5 to 50 mm, and
a minimum distance between the outer and inner surfaces of the inner canister (200) is 5 mm or more.

19. The spent nuclear fuel canister of claim 1, further comprising:
a cover (400) coupled to the outer canister (100) and sealing the spent nuclear fuel so that the spent nuclear fuel is not exposed to the outside of the spent nuclear fuel canister.
